# EUROPÄISCHE PATENTSCHRIFT

(11) **EP 0 408 817 B1**
(45) Veröffentlichungstag und Bekanntmachung des Hinweises auf die Patenterteilung: **05.05.1993**
(21) Anmeldenummer: 89810548.1
(22) Anmeldetag: 20.07.1989
(51) Int. Cl.: A61C 13/30

(54) **Verankerungs-Kombination für einen Kunstzahn**
Anchoring elements for an artificial tooth
Eléments d'ancrage pour une dent artificielle

(43) Veröffentlichungstag der Anmeldung: 23.01.1991
(73) Patentinhaber: Nordin, Harald E., CH-1822 Chernex (CH)
(72) Erfinder: Nordin, Harald E., CH-1822 Chernex (CH)
(74) Vertreter: Seehof, Michel

(56) Entgegenhaltungen:
- EP-A- 0 123 006
- DE-A- 3 110 694
- US-A- 4 758 161

## Beschreibung

Die vorliegende Erfindung bezieht sich auf eine Verankerungs-Kombination für einen Kunstzahn, mit einem Wurzelkanalanker, und auf die Verwendung dieser Kombination zur Herstellung eines Kunstzahnes. Im allgemeinen wird bei der Herstellung eines Kunstzahnes so vorgegangen, dass nach Verankerung des Wurzelkanalankers der Zahnarzt einen Kompositaufbau anfertigt und diesen Kegel stumpfförmig zuschleift. Zur besseren Verankerung dieses Kompositaufbaus weisen die Wurzelkanalanker in der Regel ein oder mehrere Retentionsflügel am vorstehenden Kopf auf. Nach der Bearbeitung des Kompositaufbaus fertigt der Zahnarzt einen Abdruck an und übergibt diesen dem Zahntechniker. Der Zahntechniker stellt aufgrund dieses Abdrucks einen Gipsabdruck her und fertigt dann eine Goldlegierungshülse an, die mittels der Methode des verlorenen Wachses hergestellt wird. Ueber diese Goldhülse wird der Porzel anaufbau gegossen, woraufhin der Aufbau mit der Hülse auf dem Kompositaufbau befestigt werden kann. Die Herstellung des Kompositaufbaus und nachträgliche Bearbeitung ist recht arbeitsaufwendig und verursacht dem Patienten grosse Unannehmlichkeiten. Ausserdem ist die Herstellung der Goldfüllung bzw. -hülse sehr arbeitsintensiv und daher auch kostspielig. Eine derartige Verankerungs-Kombination ist beispielsweise in der DE-A-3 110 694 beschrieben.

Es ist ausgehend von obigem Verfahren zur Herstellung eines Kunstzahnes bzw. Bestandteile des Kunstzahnes Aufgabe der vorliegenden Erfindung ein Verankerungs-Kombination zu schaffen, die aus wenigen einfachen Teilen besteht und andererseits ein wesentlich angenehmeres und kostengünstigeres Verfahren zur Herstellung eines Kunstzahnes ermöglicht. Diese Aufgabe wird mit der in den Ansprüchen beschriebenen Verankerungs-Kombination sowie Verwendung dieser Kombination gelöst.

Die Erfindung wird im folgenden anhand einer Zeichnung eines Ausführungsbeispieles näher erläutert:
Die Figuren 1 bis 6 zeigen die wesentlichen Verfahrensschritte zum Aufbau eines Kunstzahnes sowie die dazu benötigte Kombination,
Figur 7 zeigt, im vergrösserten Massstab, den eingebauten Kunstzahn und
Figur 8 zeigt den Wurzelkanalanker mit der aufgesteckten Kappe aus der erfindungsgemässen Verankerungs-Kombination.

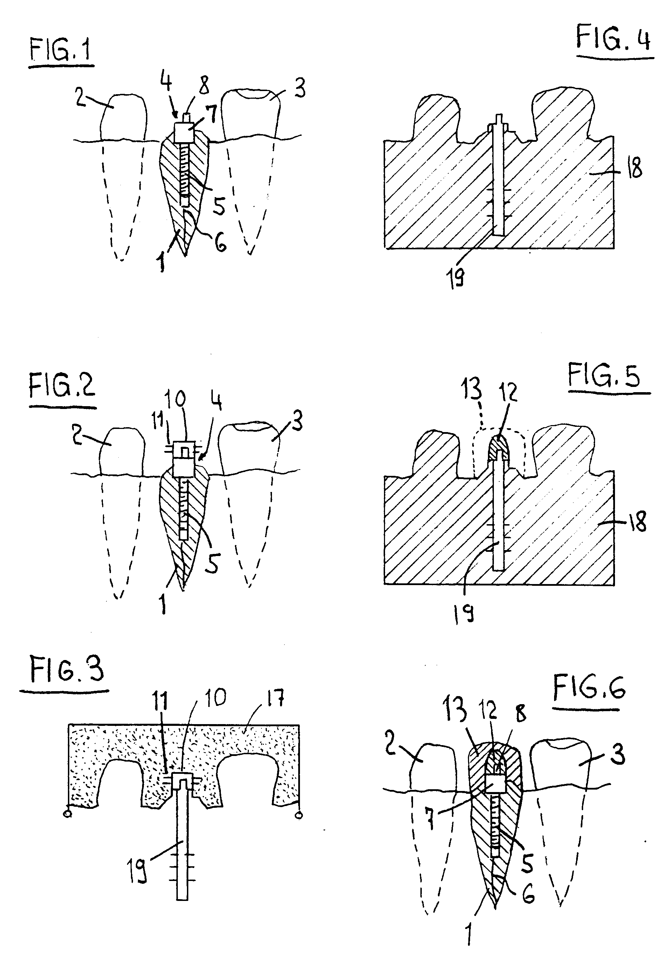

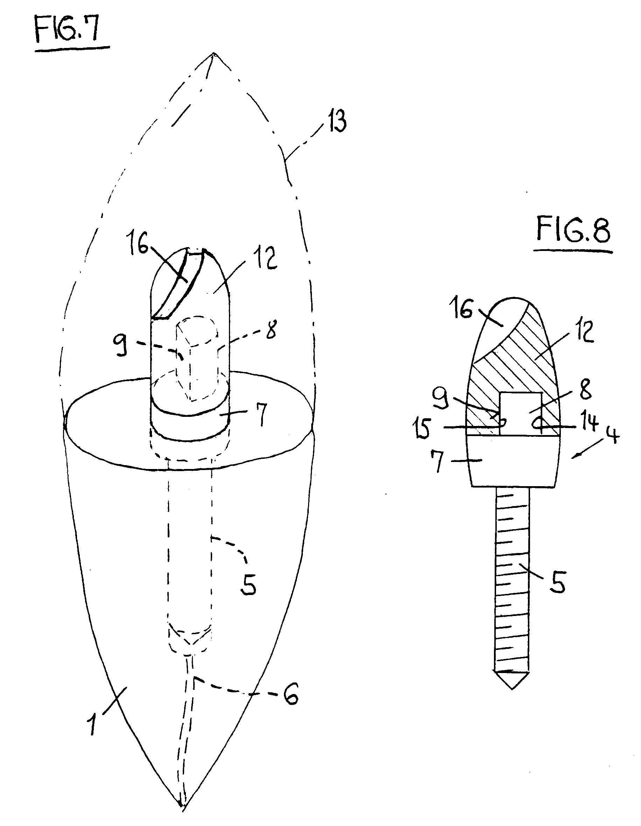

Man erkennt in Figur 1 den defekten Zahn 1 sowie die beiden schematisch angedeuteten Nachbarzähne 2 und 3. Im defekten Zahn 1 bzw. in dessen Wurzelkanal 6 ist ein Wurzelkanalanker 4 befestigt, dessen Verankerungsteil 5 nicht Gegenstand dieser Erfindung ist und beliebig sein kann. Aus Figur 7 ist besser der schematische Aufbau des defekten Zahnes sowie des Wurzelkanalankers ersichtlich, der auch hier im Wurzelkanal 6 befestigt ist. Der Kopf dieses Wurzelkanalankers besteht aus einer zylindrischen Platte 7, auf dem ein Stift 8 angeordnet ist, der eine seitliche Abflachung 9 aufweist, um die darauf steckbaren Teile orientieren zu können.

Die auf dem abgeflachten Stift 8 aufsteckbaren Teile sind eine aus Kunststoff hergestellte Ueberführungskappe 10, siehe Figur 2, die zwecks besserer Verankerung in der Abdruckmasse Flügel oder dergleiche Retentionsteile 11 aufweist und eine Kappe 12 aus einer Edelmetall-Legierung, die meistens Gold und Palladium enthält oder aus Titan besteht und jedenfalls die Eigenschaft aufweisen muss, dass die Porzellankrone 13 direkt darum aufgebaut werden kann. Die Kappe 12 weist eine dem Stift entsprechende Bohrung 14 mit Abflachung 15 auf, um einen pass genauen und genau orientierten Sitz auf dem Stift zu ermöglichen. Zwecks besserer Verankerung der Porzellankrone auf der Kappe weist diese am oberen Teil eine Verankerungsnut 16 auf. Die äussere Form der Kappe kann entweder mehr zylindrisch wie in Figur 7 oder mehr konisch wie in Figur 8 sein.

Im folgenden werden anhand der Figuren 1 bis 6 die Arbeitsabläufe zur Herstellung eines fertig befestigten Kunstzahnes erläutert. Nach entsprechender an sich bekannter Vorbereitung wird der Wurzelkanalanker 4 im defekten Zahn befestigt, sei es mit Zement oder bei entsprechend ausgeformten Verankerungsteil ohne Zement. Anschliessend steckt der Zahnarzt die aus Kunststoff bestehende, vorgefertigte Ueberführungskappe 10 auf den herausragenden Stift des Ankers und anschliessend wird ein Abdruck 17 im Munde des Patienten genommen. Anschliessend wird vom Zahntechniker gemäss Figur 3 in den Abdruck 17, in welchem die Ueberführungskappe verankert ist, ein ebenfalls aus Kunststoff bestehender, vorgefertigter Ueberführungsstift 19 eingesteckt und von dem Modell gemäss Figur 3 ein Gipsabdruck 18, wie in Figur 4 dargestellt, angefertigt. Aus diesem Gipsmodell ragt das oberste Teil des Ueberführungsstiftes hervor, der die gleichen Dimensionen und Formen wie der Stift 8 am Wurzelkanalanker aufweist. Auf diesem Stift wird die ebenfalls vorgefertigte Kappe 12 gesteckt, woraufhin der Zahntechniker die Porzellankrone direkt auf die Kappe aufbringt und nach bekannten Verfahren den umgebenden Zähnen anpasst. Als letzter Schritt muss nur noch der Zahnarzt den Kunstzahn, d. h. die Porzellankrone mit der darin enthaltenen Kappe auf den Wurzelkanalanker aufsetzen und ankleben.

Für einen Fachmann ist es, von dem einleitend beschriebenen herkömmlichen Verfahren ausgehend, sofort klar, dass die passgenauen vorgefertigten Teile einerseits und das dadurch bedingte wesentlich vereinfachte und vor allem für den Patienten wesentlich angenehmere Verfahren andererseits sehr grosse Vorteile bringt und vor allem den Zahnarzt stark entlastet. Diese spürbare Entlastung des Zahnarztes und die Vereinfachung der nachfolgenden Schritte bringt nicht nur eine angenehmere Behandlung für den Patienten sondern dürfte auch kostenmässig wesentlich günstiger sein, d. h. die Herstellungskosten für einen Kunstzahn wesentlich senken. Ausserdem wird durch die wesentlich vereinfachte Form des Wurzelkanalankers auch dessen Herstellung einfacher und kostengünstiger, da nicht nur die Form einfacher ist sondern auch infolge des kleinen kurzen Stiftes Material gespart werden kann. Wie bereits erwähnt, kann der Verankerungsteil irgendeine bereits bewährte und erprobte Ausgestaltung aufweisen.

## Patentansprüche

1. Verankerungs-Kombination für einen Kunstzahn, mit einem Wurzelkanalanker, dadurch gekennzeichnet, dass das Instrumentarium eine auf den Wurzelkanalanker (4) gerichtet steckbare Kappe (12) aus einem für den daran befestigbaren Porzellanaufbau (13) geeigneten Material enthält, wobei der Kopf des Wurzelkanalankers (4) einen Stift (8) mit einer seitlichen Abflachung (9) und die steckbare Kappe (12) eine entsprechende Bohrung (14) mit Abflachung (15) aufweisen.

2. Kombination nach Anspruch 1, dadurch gekennzeichnet, dass sie zusätzlich eine Ueberführungskappe (10) und einen Ueberführungsstift (19) enthält, wobei die Ueberführungskappe die gleiche Bohrung mit Abflachung wie die steckbare Kappe (12) und das oberste Teil des Ueberführungsstiftes die gleichen Abmessungen mit Abflachung wie der Stift (8) am Kopf des Wurzelkanalankers aufweisen.

3. Kombination nach Anspruch 1 oder 2, dadurch gekennzeichnet, dass die steckbare Kappe aus einer Edelmetalllegierung und die Ueberführungskappe und der -stift aus Kunststoff vorgefertigt sind.

4. Verwendung der Kombination der Ansprüche 1 bis 3 zur Herstellung eines Kunstzahnes, dadurch gekennzeichnet, dass nach der Verankerung des Wurzelkanalankers die Ueberführungskappe auf den Kopf des Ankers gesteckt und anschliessend ein Abdruck genommen wird, woraufhin der Ueberführungsstift in die Ueberführungskappe gesteckt und anschliessend ein Gipsabdruck angefertigt wird, und die steckbare Kappe auf den im Gipsabdruck sich befindlichen Ueberführungsstift gesteckt und auf dieser Kappe der Porzellanaufbau direkt angegossen wird und schliesslich der die Kappe enthaltende Kunstzahn auf den Wurzelkanalanker geklebt wird.

## Claims

1. A combination of anchorage elements for an artificial tooth, comprising a root canal anchorage post, characterised in that said elements comprise a cap (12) which is adapted to be plugged onto said root canal anchorage post (4) in an aligned position and is made of a suitable material for the porcelain build-up (13) to be secured thereto, the head of said root canal anchorage post (4) having a pin (8) with a lateral flattened portion (9), and the plug-on cap (12) having a corresponding bore (14) with a flattened portion (15).

2. Combination according to claim 1, characterised in that it further comprises a transfer cap (10) and a transfer pin (19), said transfer cap having the same bore with a flattened portion as said plug-on cap (12), and the top portion of said transfer pin having the same dimensions with a flattened portion as said pin (8) on the head of said root canal anchorage post.

3. Combination according to claim 1 or 2, characterised in that said plug-on cap is prefabricated out of a precious metal alloy, and said transfer cap and transfer pin are prefabricated out of plastics material.

4. Use of the combination according to claims 1 to 3 for the production of an artificial tooth, characterised in that after anchoring said root canal anchorage post, said transfer cap is plugged onto the head of the anchor and subsequently an impression is taken, whereupon said transfer pin is inserted in said transfer cap and subsequently a gypsum mold is made, said plug-on cap is plugged onto said transfer cap which is embedded in said gypsum mold and said porcelain build-up is directly molded upon said cap, and finally, said artificial tooth, which holds said cap, is cemented to said root canal anchorage post.

## Revendications

1. Combinaison d'éléments d'ancrage pour une dent artificielle, comprenant un tenon d'ancrage pour le canal radiculaire, caractérisée en que ladite combinaison comporte un chapeau (12) qui est enfichable en position alignée sur le tenon d'ancrage (4) pour le canal radiculaire et est fait d'un matériau approprié pour la superstructure en porcelaine (13) y attachable, la tête du tenon d'ancrage (4) dans le canal radiculaire présentant une cheville (8) avec un aplatissement (9) latéral, et le chapeau enfichable (12) présentant un alésage (14) correspondant avec un aplatissement (15).

2. Combinaison selon la revendication 1, caractérisée en ce qu'elle comporte en plus un chapeau de transfert (10) et une cheville de transfert (19), le chapeau de transfert présentant le même alésage avec aplatissement que le chapeau enfichable (12), et la partie du haut de la cheville de transfert présentant les mêmes dimensions avec aplatissement que la cheville (8) à la tête du tenon d'ancrage pour le canal radiculaire.

3. Combinaison selon la revendication 1 ou 2, caractérisée en ce que le chapeau enfichable est préfabriqué à partir d'un alliage de métaux précieux, et le chapeau et la cheville de transfert à partir de matière synthétique.

4. Utilisation de la combinaison selon les revendications 1 à 3 pour la production d'une dent artificielle, caractérisée en ce que le chapeau de transfert est enfiché sur la tête de l'ancre après ancrage du tenon dans le canal radiculaire et une empreinte est prise par la suite, après quoi la cheville de transfert est enfichée dans le chapeau de tranfert et un moule en plâtre est fait par la suite, et que le chapeau enfichable est enfiché sur la cheville de transfert encastrée dans le moule en plâtre, la superstructure en porcelaine est directement moulée sur ledit chapeau et, pour finir, la dent artificielle, qui renferme le chapeau, est collée sur le tenon d'ancrage dans le canal radiculaire.
